# FASCICULE DE BREVET EUROPEEN

(11) **EP 2 858 834 B1**
(45) Date de publication et mention de la délivrance du brevet: **25.10.2017**
(21) Numéro de dépôt: 13727868.5
(22) Date de dépôt: 05.06.2013
(51) Int. Cl.: B60C 15/04

(54) **TRINGLE PLIABLE POUR PNEUMATIQUE**
FALTBARER REIFENWULST
FOLDABLE BEAD FOR TIRE

(30) Priorité: 07.06.2012 FR 1255295
(43) Date de publication de la demande: 15.04.2015
(73) Titulaire: Compagnie Générale des Etablissements Michelin, 63000 Clermont-Ferrand (FR)
(72) Inventeur: HUYGHE, Jean-Michel, F-63040 Clermont-Ferrand Cedex 9 (FR); BUCHER, Laurent, F-63040 Clermont-Ferrand Cedex 9 (FR); DELFINO, Antonio, F-63040 Clermont-Ferrand Cedex 9 (FR); MERALDI, Jean-Paul, F-63040 Clermont-Ferrand Cedex 9 (FR); RAPENNE, Thibault, F-63040 Clermont-Ferrand Cedex 9 (FR)
(74) Mandataire: Desbordes, Guillaume
(86) Numéro de dépôt international: PCT/EP2013/061585
(87) Numéro de publication internationale: WO 2013/182598

(56) Documents cités:
- EP-A1- 2 179 869
- WO-A1-2008/061544
- DE-A1- 1 918 224

## Description

L'invention concerne les tringles pour pneumatiques. Elle s'applique à tout type de pneumatiques pour tout type de véhicules.

Un pneumatique comprend, de façon classique, deux bourrelets circonférentiels destinés à permettre l'accrochage du pneumatique sur la jante. Chaque bourrelet comprend une tringle annulaire de renfort.

On connait de l'état de la technique un pneumatique pour véhicule terrestre comprenant une tringle comprenant une âme et une couche d'un fil en acier et enroulé autour de l'âme. L'âme est constituée d'un monofilament en acier. Le monofilament d'acier est cintré sur lui-même et ses deux extrémités soudées afin de former un anneau sensiblement circulaire.
Le document DE1918224 divulgue une tringle selon le préambule de la revendication 1.

Lors des étapes de transport et de stockage, un tel pneumatique occupe un volume donné. Ainsi, pour un volume de transport ou de stockage donné, le nombre de pneumatiques pouvant être transportés et stockés dans ce volume de transport ou de stockage donné reste relativement limité, ce qui augmente les coûts de logistique et donc le coût du pneumatique.

L'invention a pour but de fournir un pneumatique moins encombrant durant les étapes de transport et de stockage.

A cet effet, l'invention a pour objet une tringle pour pneumatique comprenant :
- une âme comprenant plusieurs enroulements circonférentiels d'au moins un brin d'âme, chaque brin d'âme comprenant une fibre textile multifilamentaire d'âme noyée dans une matrice organique d'âme, le matériau dans lequel est réalisé chaque brin d'âme présente une limite d'élasticité mesurée selon la norme ISO 14125 supérieure ou égale à 800MPa ;
- une couche externe comprenant un unique brin de couche externe comprenant une fibre textile multifilamentaire de couche externe noyée dans une matrice organique de couche externe, le brin de couche externe étant enroulé autour de l'âme.

L'âme et la couche externe présentent une aptitude élevée à la déformation élastique qui est amplifiée par la pluralité d'enroulements de l'âme. En effet, en augmentant le nombre d'enroulements et pour une dimension de tringle prédéterminée, on réduit la section de chaque enroulement, donc la rigidité de la section de chaque enroulement et on diminue le rayon de courbure critique en flexion de l'âme.

La combinaison d'une part, des matériaux dans lesquels sont réalisées l'âme et la couche externe et, d'autre part, de la pluralité d'enroulements, permet d'obtenir une tringle présentant une excellente aptitude à la déformation élastique.

Ainsi, il est possible de plier les pneumatiques sans aucun risque de déformation plastique irréversible. On limite donc le volume occupé par le pneumatique, notamment lors des étapes de transport et de stockage et donc les coûts logistiques.

De plus, la tringle selon l'invention est relativement légère. En effet, la nature des matériaux dans lesquels sont réalisées l'âme et la couche externe permet de réduire la masse de la tringle selon l'invention de 50 à 70 % par rapport à celle d'une tringle à âme et à couche métalliques tout en conservant ses propriétés mécaniques, notamment de force à rupture.

Par enroulement circonférentiel, on entend un enroulement autour de l'axe principal de la tringle et s'étendant selon la direction circonférentielle autour de cet axe. L'enroulement peut former un cercle sensiblement plan ou bien osciller autour d'un plan perpendiculaire à l'axe de la tringle.

Par définition, une fibre textile est non métallique. Une fibre textile multifilamentaire comprend des filaments textiles élémentaires agencés côte à côte et orientés de façon sensiblement unidirectionnelle. Les filaments élémentaires sont donc sensiblement parallèles entre eux, à quelques chevauchements près.

Chaque fibre textile, notamment d'âme et de couche externe, permet le renforcement de la matrice organique. De telles fibres sont par exemple choisies dans le groupe constitué par les fibres d'alcool polyvinylique, de polyamide aromatique (ou "aramide"), les fibres polyester, polyester aromatique, polyéthylène, les fibres de cellulose, rayonne, viscose, polyphénylène benzobisoxazole (ou "PBO"), polyéthylène naphténate ("PEN"), les fibres de verre, de carbone, de silice, les fibres céramiques, et les mélanges de telle fibres. On préfère utiliser des fibres choisies dans le groupe constitué par les fibres de verre, les fibres de carbone et les mélanges de telles fibres.

De préférence, la fibre d'âme est une fibre de verre. De préférence, la fibre de couche externe est une fibre de verre.

Par matrice organique, on entend toute matrice comportant, en poids, plus de 50%, de préférence plus de 75% et plus préférentiellement plus de 90 % de matière organique. La matrice organique peut contenir des minéraux et/ou des métaux provenant de son procédé de fabrication, mais également des additifs minéraux et/ou métalliques volontairement ajoutés. Ainsi, une matrice organique peut, par exemple, être une matrice polymérique thermodurcissable, par exemple à base de polyester insaturé, de polyépoxyde, de dérivé phénolique ou d'aminoplaste, ou encore thermostable, par exemple à base de cyanate, de polybismaléimide, de polyimide, de polyamidoimide, ou encore thermoplastique, par exemple à base de polypropylène, de polyamide, de polyester saturé, de polyoxyméthylène, de polysulfone et polyéthersulfone, de polyéthercétone et polyétheréthercetone, de polysulfure de phénylène, de polyétherimide, ou encore d'élastomère thermoplastique ou réticulé, par exemple à base de polyuréthanne, de silicone ou de caoutchouc ou bien une matrice organique issue d'un mélange de ces matrices.

De préférence, la matrice organique d'âme est une résine thermodurcie, de préférence réticulée. De préférence, la matrice organique de couche externe est une résine thermodurcie, de préférence réticulée. Il s'agit par exemple d'une résine réticulable par un rayonnement ionisant, tel que par exemple un rayonnement ultraviolet - visible, un faisceau d'électrons accélérés ou de rayons X. On peut choisir aussi une composition comprenant une résine réticulable par un peroxyde, la réticulation ultérieure pouvant alors être effectuée, le moment venu, au moyen d'un apport de calories, par exemple par l'action de micro-ondes. De préférence, on utilise une composition du type durcissable par un rayonnement ionisant, la polymérisation finale pouvant être déclenchée et contrôlée aisément au moyen d'un traitement ionisant, par exemple de type UV ou UV-visible. A titre de résine réticulable, on utilise plus préférentiellement une résine polyester (i.e., à base de polyester insaturé) ou une résine vinylester. Plus préférentiellement encore, on utilise une résine vinylester.

Dans un mode de réalisation, les matériaux dans lesquels sont réalisées l'âme et la couche externe sont sensiblement identiques. Dans un autre mode de réalisation, ils sont différents.

Dans un mode de réalisation, les fibres d'âme et de couche externe sont sensiblement identiques. Dans un autre mode de réalisation, elles sont différentes.

Dans un mode de réalisation, les matrices organiques d'âme et de couche externe sont sensiblement identiques. Dans un autre mode de réalisation, elles sont différentes.

Dans un mode de réalisation, l'âme comprend un seul brin d'âme et de préférence est constituée d'un seul brin.

Dans une variante, l'âme comprend plusieurs enroulements de ce seul brin. Chaque enroulement forme alors une spire.

Dans un mode de réalisation, l'âme comprend plusieurs brins d'âme distincts. Chaque brin peut être enroulé pour former une ou plusieurs spires.

Dans une variante, chaque brin est monolithique. Par monolithique, on entend que chaque brin ne présente aucune discontinuité de matière ou de jointure à l'échelle macroscopique. Chaque brin étant monolithique, l'âme est moins fragile que l'âme de la tringle de l'état de la technique qui présente une faiblesse au point de soudure de ses extrémités. De préférence, les filaments élémentaires sont répartis de façon homogène dans tout le volume du tore.

Dans une variante, les brins sont assemblés par câblage. Dans cette variante, les brins sont enroulés en hélice les uns avec les autres et ne subissent pas de torsion autour de leur propre axe.

Dans une autre variante, les brins sont assemblés par retordage. Dans cette variante, les brins sont enroulés en hélice les uns avec les autres et subissent à la fois une torsion collective et une torsion individuelle autour de leur propre axe, ce qui génère un couple de détorsion sur chacun des brins.

Dans encore une autre variante, l'âme comprend plusieurs tores monolithiques juxtaposés parallèlement les uns aux autres.

Avantageusement, le matériau dans lequel est réalisé chaque brin d'âme présente une limite d'élasticité mesurée selon la norme ISO 14125 à 23°C supérieure ou égale à 1000 MPa et plus préférentiellement à 1200 MPa.

Avantageusement, le matériau dans lequel est réalisé le brin de couche externe présente une limite d'élasticité mesurée selon la norme ISO 14125 à 23°C supérieure ou égale à 800 MPa, de préférence à 1000 MPa et plus préférentiellement à 1200 MPa.

Grâce à la haute limite d'élasticité du matériau d'âme et de couche externe, on améliore la pliabilité de la tringle et on réduit davantage le risque de plastification de la tringle lors des étapes de transport et stockage.

Avantageusement, le matériau dans lequel est réalisé chaque brin d'âme présente un module d'Young mesuré selon la norme ISO 14125 à 23°C inférieur ou égal à 100 GPa, de préférence à 75 GPa et plus préférentiellement à 50 GPa.

Avantageusement, le matériau dans lequel est réalisé chaque brin de couche externe présente un module d'Young mesuré selon la norme ISO 14125 à 23°C inférieur ou égal à 100 GPa, de préférence à 75 GPa et plus préférentiellement à 50 GPa.

Le faible module d'Young des matériaux d'âme et de couche externe permet d'obtenir une âme et une couche externe résistantes en déformation.

De préférence, la combinaison de la haute limite d'élasticité et du faible module d'Young confère à l'âme et à la couche externe une excellente aptitude à la déformation dans le domaine élastique.

Avantageusement, le rapport de la contribution de l'âme à la masse de la tringle sur la contribution de l'âme à la force à rupture de la tringle est inférieur ou égal à 2, de préférence inférieur ou égal à 1,5 et plus préférentiellement inférieur ou égal à 1. Une augmentation de la masse de la tringle, engendre une augmentation relativement élevée de la force à rupture par rapport à la même augmentation de masse de la tringle de l'état de la technique.

La contribution de l'âme à la force à rupture est définie par le rapport de la force à rupture de l'âme seule sur la force à rupture de la tringle. La contribution de l'âme à la masse de la tringle est définie par le rapport de la masse de l'âme seule sur la masse de la tringle.

Afin de déterminer le rapport de contribution à la force à rupture, les mesures de force à la rupture de la tringle ou de l'âme (charge maximale en N) peuvent être effectuées par n'importe quel type de méthode généralement utilisée. On pourra par exemple utiliser une méthode conforme à la norme ISO 6892 de 1984 sur un échantillon rectiligne de la tringle ou bien une méthode conforme au test de traction tringle décrit ci-dessous.

Avantageusement, le rapport de la contribution de l'âme à la masse de la tringle sur la contribution de l'âme à la force à rupture de la tringle est supérieur ou égal à 0,25, de préférence à 0,4 et plus préférentiellement à 0,5. Ainsi, la tringle présente une excellente répartition des contributions à la masse et à la force à rupture entre l'âme et la couche externe.

Préférentiellement, le rapport de la contribution de l'âme à la masse de la tringle sur la contribution de l'âme à la force à rupture de la tringle est compris dans au moins un des intervalles [0,25 ; 2[, [0,4 ; 2[, [0,5 ; 2[, [0,25 ; 1,5] [0,4 ; 1,5], [0,5 ; 1,5], [0,25 ; 1], [0,4 ; 1] et [0,5 ; 1].

Plus préférentiellement, le rapport de la contribution de l'âme à la masse de la tringle sur la contribution de l'âme à la force à rupture de la tringle est égal à 1.

De préférence, la contribution de l'âme à la force à rupture de la tringle est supérieure ou égale à 15 %, de préférence à 20 % et plus préférentiellement à 25 %. Ainsi, la contribution de l'âme de la tringle à la force à rupture de la tringle est supérieure à la contribution de l'âme de la tringle de l'état de la technique à la force à rupture de la tringle de l'état de la technique. A propriétés mécaniques constantes, la tringle est donc plus légère.

De façon optionnelle, la contribution de l'âme à la force à rupture de la tringle est inférieure ou égale à 75%. La contribution à la force à rupture reste ainsi relativement bien répartie entre l'âme et la couche externe.

De préférence, la contribution de l'âme à la masse de la tringle est supérieure ou égale à 15%, de préférence à 20% et plus préférentiellement à 25%.

De façon optionnelle, la contribution de l'âme à la masse de la tringle est inférieure ou égale à 75%. La contribution à la masse de la tringle reste ainsi relativement bien répartie entre l'âme et la couche externe.

Avantageusement, le rapport du diamètre du tore défini par l'âme sur le diamètre du tore défini par la tringle est supérieur ou égal à 0,3, de préférence à 0,45, et plus préférentiellement à 0,5. Ainsi, il est possible d'obtenir des tringles comprenant une âme relativement peu encombrante et présentant d'excellentes propriétés mécaniques, notamment de force à rupture.

De préférence, la force à rupture de la tringle est comprise entre 1600 daN et 2600 daN bornes incluses, de préférence entre 1800 daN et 2400 daN bornes incluses et plus préférentiellement entre 2000 daN et 2200 daN bornes incluses.

Les mesures de force à la rupture de la tringle ou de l'âme (charge maximale en N) sont effectuées à 23°C en suivant préférentiellement un test de traction circonférentielle, dit test de traction tringle, sur une machine de traction comprenant douze secteurs mobiles radialement. Au cours de ce test, réalisé dans des conditions quasi-statiques, on positionne la tringle ou l'âme à tester autour des secteurs. Le déplacement simultané et progressif des secteurs a pour effet d'exercer une force radiale d'intensité croissante sur la tringle ou l'âme. Les mouvements des secteurs sont suivis par trois capteurs de force mesurant les forces exercées sur la tringle ou l'âme. La force à rupture est déterminée lorsqu'un élément de la tringle rompt (cas du test sur la tringle) ou lorsque l'âme rompt (cas du test sur l'âme). La fréquence d'acquisition est égale à 100Hz. La valeur de force à rupture retenue est la moyenne des trois valeurs mesurées par les trois capteurs.

Selon des caractéristiques préférentielles de la tringle :
- Le diamètre de chaque brin d'âme et/ou de couche externe est compris entre 0,5 et 4 mm.
- Le diamètre de chaque filament élémentaire de chaque fibre textile multifilamentaire d'âme et/ou de couche externe est compris entre 2 et 30 µm.
- Chaque fibre textile multifilamentaire d'âme et/ou de couche externe est continue. Par continue et par opposition à discontinue, on comprend que pour une longueur prédéterminé de la fibre, par exemple 5 cm, au moins 80% et de préférence au moins 90% des filaments élémentaires de la fibre sont individuellement continus.
- Chaque fibre textile multifilamentaire d'âme et/ou de couche externe comprend plus de 10 filaments élémentaires, de préférence plus de 100 filaments élémentaires et plus préférentiellement plus de 1000 filaments élémentaires.

Dans un mode de réalisation d'une tringle du type à une couche, le brin de couche externe est enroulé au contact de l'âme.

Dans un autre mode de réalisation d'une tringle du type à plusieurs couches, la tringle comprend au moins une couche intermédiaire comprenant un unique brin enroulé autour de l'âme, et disposée entre l'âme et la couche externe.

Optionnellement, le brin de couche intermédiaire est enroulé au contact de l'âme.

De préférence, le brin de couche intermédiaire comprend au moins une fibre textile multifilamentaire de couche intermédiaire noyée dans une matrice organique de couche intermédiaire.

Les fibres textiles multifilamentaires et matrices organiques de couche intermédiaire utilisées peuvent être choisies parmi celles décrites en références aux fibres et matrices organiques d'âme et de couche externe. De préférence, la fibre textile multifialentaire de couche intermédiaire est une fibre de verre et la matrice organique de couche intermédiaire est une résine thermodurcie.

Dans un mode de réalisation, les matériaux dans lesquels sont réalisées l'âme, la couche externe et la couche intermédiaire sont sensiblement identiques. Dans un autre mode de réalisation, au moins deux matériaux sont différents.

Dans un mode de réalisation, les fibres d'âme, de couche externe et de couche intermédiaire sont sensiblement identiques. Dans un autre mode de réalisation, elles sont différentes.

Dans un mode de réalisation, les matrices organiques d'âme, de couche externe et de couche intermédiaire sont sensiblement identiques. Dans un autre mode de réalisation, au moins deux sont différentes.

Avantageusement, les modules en extension et en flexion du matériau d'âme et/ou de couche externe et/ou de couche intermédiaire mesurés respectivement selon les normes ASTM D 638 et ASTM D 790 à 23°C sont de préférence supérieurs à 15 GPa, plus préférentiellement supérieurs à 30 GPa, notamment compris entre 30 et 50 GPa bornes incluses. De préférence, le module en extension de la matrice organique d'âme et/ou de couche externe et/ou de couche intermédiaire mesuré selon la norme ASTM D 638 à 23°C est supérieur ou égal à 2.3 GPa, de préférence à 2,5 GPa et plus préférentiellement à 3 GPa.

De façon optionnelle, le matériau d'âme et/ou de couche externe et/ou de couche intermédiaire a une déformation élastique en compression au moins égal à 2 %, de préférence à 3 %. De préférence, le matériau d'âme et/ou de couche externe de couche intermédiaire a, en flexion, une contrainte de rupture en compression supérieure à la contrainte de rupture en extension.

Les propriétés mécaniques en flexion du matériau d'âme et/ou de couche externe de couche intermédiaire sont mesurées à l'aide d'une machine de traction de la société Instron de type 4466.

Les propriétés en compression sont mesurées sur le matériau d'âme et/ou de couche externe et/ou de couche intermédiaire par la méthode dite du test de boucle (D. Sinclair, J. App. Phys. 21, 380 (1950*)*)*.* Dans l'utilisation présente de ce test, on réalise une boucle que l'on amène progressivement au point de rupture. La nature de la rupture, facilement observable en raison de la grande taille de la section, permet immédiatement de se rendre compte de la rupture du matériau d'âme en extension ou en compression.

De préférence, on observe que le matériau d'âme, sollicité en flexion jusqu'à rupture, se rompt du côté où la matière est en extension, ce que l'on identifie par simple observation visuelle.

Etant donné que dans ce cas les dimensions de la boucle sont importantes, il est possible à tout instant de lire le rayon du cercle inscrit dans la boucle. Le rayon du cercle inscrit juste avant le point de rupture correspond au rayon de courbure critique. Il est désigné par Rac. La formule suivante permet ensuite de déterminer par le calcul la déformation élastique critique : ecr = r / (Rac+r) où r correspond au rayon du matériau.

La contrainte de rupture en compression est obtenue par le calcul par la formule suivante: σc = ecr.Me où Me est le module en extension. Puisque, dans le cas du matériau d'âme et/ou de couche externe et/ou de couche intermédiaire, la rupture de la boucle apparait dans la partie en extension, on conclut que, en flexion, la contrainte de rupture en compression est supérieure à la contrainte de rupture en extension.

On a également procédé à la rupture en flexion d'un barreau rectangulaire selon la méthode dite des trois pannes. Cette méthode correspond à la norme ASTM D 790. Cette méthode permet également de vérifier, visuellement, que la nature de la rupture est bien en extension.

La température de transition vitreuse Tg de la matrice organique d'âme et/ou de couche externe et/ou de couche intermédiaire est préférentiellement supérieure à 130°C, plus préférentiellement supérieure à 140°C. La température de transition vitreuse est mesurée selon la norme ASTM D 3418.

La teneur en fibres du matériau d'âme et/ou de couche externe et/ou de couche intermédiaire est avantageusement comprise entre 30% et 80% bornes incluses de la masse globale du matériau. De préférence, la teneur en fibres est comprise entre 50% et 80% bornes incluses de la masse du matériau d'âme et/ou de couche externe et/ou de couche intermédiaire. La teneur en masse de fibres, exprimée en pour-cent, est calculée en divisant la masse de 1 m de fibres, obtenue à partir du titre, par la masse linéique du matériau d'âme et/ou de couche externe et/ou de couche intermédiaire.

Avantageusement, la densité du matériau d'âme et/ou de couche externe et/ou de couche intermédiaire est inférieure ou égale à 2.2, de préférence à 2,05 et plus préférentiellement à 1,6. De préférence, la densité du matériau d'âme et/ou de couche externe et/ou de couche intermédiaire est comprise entre 1.4 et 2.05 bornes incluses, intervalle dans lequel le matériau présente le meilleur compromis entre masse et propriétés mécaniques, notamment de force à rupture. On mesure la densité du matériau d'âme et/ou de couche externe et/ou de couche intermédiaire au moyen d'une balance spécialisée de la société Mettler Toledo de type PG503 DeltaRange. Des échantillons, de quelques centimètres, sont successivement pesés dans l'air et plongés dans du méthanol ; le logiciel de l'appareil détermine ensuite la densité ; la densité est la moyenne de trois mesures.

L'invention a également pour objet un pneumatique comprenant au moins une tringle telle que définie ci-dessus.

De préférence, le pneumatique est pour véhicule terrestre. Par véhicule terrestre, on entend tout véhicule à l'exception des aéronefs. De préférence, le pneumatique est pour véhicule de tourisme.

En variante, le pneumatique est pour aéronef.

L'invention sera mieux comprise à la lecture de la description qui va suivre, donnée uniquement à titre d'exemple non limitatif et faite en se référant aux dessins dans lesquels:
- la figure 1 est une vue en perspective d'un pneumatique selon l'invention;
- les figures 2 et 3 sont des vues en coupe perpendiculaire à l'axe de la tringle (supposée rectiligne et au repos) d'une tringle selon des premier et deuxième modes de réalisation de l'invention;
- la figure 4 est une vue analogue à celle des figures 2 et 3 d'une tringle de l'état de la technique.

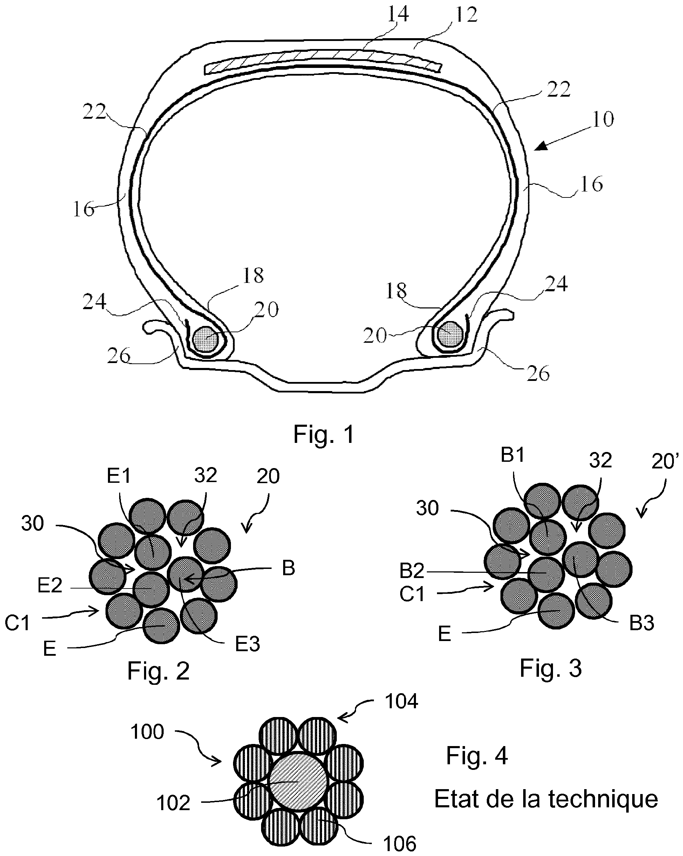

On a représenté sur la figure 1 un pneumatique selon l'invention désigné par la référence générale 10. En l'espèce, le pneumatique 10 est destiné à être monté sur un véhicule terrestre, ici un véhicule de tourisme, et a pour dimensions 205/55 R16. En variante, le pneumatique 10 est un pneumatique pour aéronef.

Le pneumatique 10 comporte un sommet 12 renforcé par une armature de sommet 14, deux flancs 16 et deux bourrelets 18, chacun de ces bourrelets 18 étant renforcé avec une tringle 20 annulaire. Le sommet 14 est surmonté d'une bande de roulement non représentée sur cette figure schématique. Une armature de carcasse 22 est enroulée autour des deux tringles 20 dans chaque bourrelet 18 et comprend un retournement 24 disposé vers l'extérieur du pneumatique 20 qui est ici représenté monté sur une jante 26. L'armature de carcasse 22 est constituée d'au moins une nappe renforcée par des câbles. L'armature 22 est du type radial.

Chaque tringle 20 a une forme générale toroïdale autour d'un axe et présente une section sensiblement circulaire. En variante, la tringle 20 présente une section polygonale, par exemple, carré, rectangulaire ou hexagonale ou bien encore une section elliptique ou oblongue.

On a représenté sur la figure 2 une tringle 20 selon un premier mode de réalisation de l'invention.

La tringle 20 comprend une âme 30 et une couche externe C1. Le diamètre Dt du tore défini par la tringle 20 est égal à 6,3 mm.

L'âme 30 comprend plusieurs enroulements circonférentiels E1, E2, E3 d'au moins un brin d'âme B. En l'espèce, l'âme 30 comprend trois enroulements circonférentiels E1, E2, E3 d'un seul brin d'âme B. En l'espèce, chaque enroulement circonférentiel E1, E2, E3 forme une spire dont l'axe est commun avec celui de la tringle 20. Ainsi, chaque enroulement E1, E2, E3 prend, en projection dans un plan perpendiculaire à l'axe de la tringle, une forme générale circulaire.

Le brin B est trancanné sur plusieurs tours de sorte que l'âme 30 présente une section sensiblement polygonale, ici triangulaire. le diamètre du brin B est compris entre 0,5 et 4 mm. Le diamètre Da du tore défini par l'âme 30 et dans lequel est inscrite l'âme 30 est égal à 3,28 mm.

Le brin B est réalisé dans un matériau d'âme Ma comprenant une fibre textile multifilamentaire d'âme, noyée dans une matrice organique d'âme. La fibre textile multifilamentaire d'âme est une fibre de verre et la matrice organique d'âme est une résine thermodurcie. La fibre textile multifilamentaire est continue. En variante, la fibre textile est discontinue.

La couche externe C1 comprend un unique brin E de couche externe enroulé en hélice autour de l'âme 30 et à son contact. L'unique brin E présente un diamètre Df égal à 1,52 mm. L'unique brin E est réalisé dans un matériau de couche externe Mc comprenant une fibre textile multifilamentaire de couche externe, noyée dans une matrice organique de couche externe. La fibre textile multifilamentaire de couche externe est une fibre de verre et la matrice organique de couche externe est une résine thermodurcie.

En l'espèce, les matériaux d'âme Ma et de couche externe Mc sont sensiblement identiques. En variante, les matériaux d'âme Ma et de couche externe Mc sont différents.

La fibre de verre comprend plus de 10 filaments élémentaires de verre, de préférence plus de 100 et plus préférentiellement plus de 1000 filaments élémentaires agencés côte à côte et donc sensiblement parallèles entre eux, à quelques chevauchements près. Le diamètre de chaque filament élémentaire de la fibre textile est compris entre 2 et 30 µm.

La ou les fibres de verre utilisées peuvent être du type « E » ou « R ».

Les résines thermodurcies d'âme et de couche externe sont du type vinylesters. Sans que cette définition soit limitative, la résine vinylester est préférentiellement du type époxyvinylester. On utilise plus préférentiellement une résine vinylester, notamment du type époxyde, qui au moins pour partie est à base (c'est-à-dire greffée sur une structure du type) novolaque (encore appelée phénoplaste) et/ou bisphénolique, soit préférentiellement une résine vinylester à base novolaque, bisphénolique, ou novolaque et bisphénolique, telle que décrite par exemple dans les demandes EP 1 074 369 et EP 1 174 250. Une résine époxyvinylester de type novolaque et bisphénolique a montré d'excellents résultats ; à titre d'exemples, on peut citer notamment les résines vinylester "ATLAC 590" ou "ATLAC E-Nova FW 2045" de la société DSM (diluées toutes deux avec du styrène). De telles résines époxyvinylester sont disponibles chez d'autres fabricants tels que Reichhold, Cray Valley, UCB.

Le brin d'âme B et le brin de couche externe E sont monolithiques et sont fabriqués par exemple par imprégnation de chaque fibre comme décrit dans le document US 3,730,678 ou bien par injection de la matrice organique dans un moule où l'on a préalablement disposé chaque fibre ou bien comme décrit dans le document EP1167080.

Le brin E de la couche externe C1 est enroulé en hélice autour de l'âme 30 sur plusieurs tours, ici sur 10 tours de sorte que la couche C1 soit saturée, c'est-à-dire qu'il n'existe pas suffisamment de place entre les enroulements adjacents pour pouvoir insérer un enroulement supplémentaire. Le brin E est enroulé sur 10 tours en raison de l'écartement existant entre les trois enroulements de l'âme 30 dans la position d'équilibre mécanique de la tringle 20. On relie les deux extrémités du brin E au moyen d'un manchon.

On a représenté sur la figure 3 une tringle 20' selon un deuxième mode de réalisation de l'invention. Les éléments analogues à ceux représentés sur les figures précédentes sont désignés par des références identiques.

A la différence de la tringle 20 selon le premier mode de réalisation, l'âme 30 comprend plusieurs brins distincts B1, B2, B3. En l'espèce, l'âme 30 comprend plusieurs tores monolithiques juxtaposés parallèlement les uns aux autres, chaque tore formant un brin B1, B2, B3. L'axe de chaque brin B1, B2, B3 est commun avec celui de la tringle 20'.Les brins sont accolés de sorte que l'âme 30 présente une section sensiblement polygonale, ici triangulaire. Le diamètre Da du tore défini par l'âme 30 et dans lequel est inscrite l'âme 30 est égal à 3,60 mm.

Tous les brins d'âme B1, B2, B3 sont réalisés dans le même matériau d'âme. Par exemple, les brins d'âme B1, B2, B3 sont réalisés dans le matériau Ma du brin B. En variante, les brins d'âmes B1, B2, B3 sont réalisés dans au moins deux matériaux d'âme différents. Le diamètre de chaque brin B1, B2, B3 est compris entre 0,5 et 4 mm.

Le pneumatique 10 illustré à la figure 1 comprend deux tringles 20 selon le premier mode de réalisation. Un pneumatique 10' analogue selon le deuxième mode de réalisation (non représenté) comprend deux tringles 20' selon le deuxième mode de réalisation.

On a représenté sur la figure 4 une tringle de l'état de la technique désignée par la référence générale 100.

Contrairement à la tringle selon l'invention, la tringle 100 comprend une âme métallique 102 constituée d'un fil réalisé dans un acier dont la teneur en carbone est égale à 0,1%. Le diamètre Da du tore défini par l'âme 102 est égal à 2,15 mm. La tringle 100 comprend une couche externe 104 comprenant un fil 106 enroulé autour de l'âme 102. Le fil 106 de la couche externe 104 présente un diamètre Df égal à 1,30 mm et est réalisé en acier dont la teneur en carbone est égale à 0.7%. Le diamètre du tore Dt défini par la tringle 100 est égal à 4,8 mm.

### MESURES COMPARATIVES

On a comparé les tringles 20, 20' selon les premier et deuxième modes de réalisation et la tringle 100 de l'état de la technique. On a également comparé les pneumatiques 10, 10' selon les premier et deuxième modes de réalisation et un pneumatique de l'état de la technique comprenant deux tringles 100 de l'état de la technique.

On a résumé dans le tableau 1 ci-dessous les caractéristiques issues des mesures réalisées.

**Tableau 1**

| **Tringle testée** | **Tringle 100** | **Tringle 20** | **Tringle 20**' |
|---|---|---|---|
| Masse | 149 g | 54 g | 54 g |
| Force à rupture (Fm) | 1875 daN | 2108 daN | 2165 daN |
| Pression d'éclatement | > 17 bars | > 17 bars | > 17 bars |
| Limite d'élasticité du matériau d'âme (Re) | 700 MPa | > 1000 MPa | > 1000 MPa |
| Module d'Young (E) | 205 GPa | 40 GPa | 40 GPa |
| Diamètre du tore (Dt) | 4,8 mm | 6,3 mm | 6,5 mm |
| Diamètre de l'âme (Da) | 2,15 mm | 3,28 mm | 3,60 mm |
| Rd=Da/Dt | 0,45 | 0,52 | 0,55 |
| Contribution de l'âme à la force à rupture de la tringle (Rf) | 11 % | 23% | 26% |
| Contribution de l'âme à la masse de la tringle (Rm) | 25% | 23% | 26% |
| R=Rm/Rf | 2,27 | 1 | 1 |

Chaque tringle 20, 20' permet de maintenir d'excellentes caractéristiques mécaniques, notamment de force à rupture, tout en réduisant de 64% la masse de la tringle 100 de l'état de la technique et en évitant tout risque de déformation plastique irréversible.

Par ailleurs, chaque pneumatique 10, 10' présente une résistance à l'éclatement identique au pneumatique de l'état de la technique.

La force à la rupture Fm de chaque tringle 20, 20' est comprise entre 1600 daN et 2600 daN bornes incluses, de préférence entre 1800 daN et 2400 daN bornes incluses et plus préférentiellement entre 2000 daN et 2200 daN bornes incluses. Ainsi, avec une masse bien inférieure à celle de la tringle 100 de l'état de la technique, chaque tringle 20, 20' présente une force à rupture supérieure à celle de la tringle 100.

Le rapport Rd du diamètre Da du tore défini par l'âme 30 sur le diamètre Dt du tore défini par chaque tringle 20, 20' est supérieur ou égal à 0,3, de préférence à 0,45 et plus préférentiellement à 0,5.

La contribution Rm de l'âme 30 à la masse de la tringle 20 est supérieure ou égale à 10%, de préférence à 15% et plus préférentiellement à 20%. Cette contribution Rm est inférieure ou égale à 75% pour les tringles 20, 20'.

La contribution Rf de l'âme 30 à la force à rupture Fm de la tringle 20 est supérieure ou égale à 15 %, de préférence 20 % et plus préférentiellement à 25 %. Cette contribution Rf est inférieure ou égale à 75% pour chaque tringle 20, 20'.

A contribution de l'âme à la masse de la tringle égale, l'âme de chaque tringle 20, 20' présente une contribution la force à rupture de la tringle plus élevée, ie plus de 2 fois supérieure à celle de la tringle 100.

Le rapport R de la contribution Rm sur la contribution Rf est inférieur ou égal à 2, de préférence à 1,5 et plus préférentiellement à 1. Ce rapport R est supérieur ou égal à 0,25, de préférence à 0,4 et plus préférentiellement à 0,5. Avantageusement, le rapport R est égal à 1.

Le matériau d'âme Ma et de couche Mc de chaque tringle 20, 20' présente une limite d'élasticité Re mesurée selon la norme ISO 14125 à 23°C supérieure ou égale à 800 MPa, de préférence à 1000 MPa et plus préférentiellement à 1200 MPa.

Le matériau d'âme Ma et de couche Mc de chaque tringle 20, 20' présente un module d'Young E mesuré selon la norme ISO 14125 à 23°C inférieur ou égal à 100 GPa, de préférence à 75 GPa et plus préférentiellement à 50 GPa.

L'invention ne se limite pas au mode de réalisation précédemment décrit.

En effet, la tringle selon l'invention peut être montée sur tout type de pneumatique. Par exemple, la tringle peut être destinée à un pneumatique pour des véhicules industriels choisis parmi les camionnettes, des véhicules lourds tels que "Poids lourd" - i.e., métro, bus, engins de transport routier (camions, tracteurs, remorques), véhicules hors-la-route, aéronefs -, engins agricoles ou de génie civil, autres véhicules de transport ou de manutention.

Dans une variante non représentée d'une tringle du type à plusieurs couches, la tringle comprend au moins une couche intermédiaire comprenant un unique brin enroulé en hélice autour de l'âme, et disposée entre l'âme et la couche externe. L'unique brin de couche intermédiaire est enroulé en hélice au contact de l'âme. Dans cette variante, l'unique brin de couche intermédiaire est réalisé dans un matériau de couche intermédiaire comprenant une fibre textile multifilamentaire de couche intermédiaire noyée dans une matrice organique de couche intermédiaire.

La fibre textile multifilamentaire et la matrice organique de couche intermédiaire utilisées peuvent être choisies parmi celles décrites en références aux fibres et matrices organiques d'âme et de couche externe. De préférence, la fibre textile multifilamentaire de couche intermédiaire est une fibre de verre et la matrice organique de couche intermédiaire est une résine thermodurcie.

Dans un mode de réalisation, l'âme comprend plusieurs enroulements de plusieurs brins distincts assemblés par câblage ou retordage.

En outre, les caractéristiques des différents modes de réalisation peuvent être indifféremment combinées les unes avec les autres lorsque celles-ci sont compatibles entre elles toujours selon le cadre défini par les revendications ci-jointes.

On notera qu'il est possible d'exploiter une tringle pour pneumatique comprenant:
- une âme comprenant plusieurs enroulements circonférentiels d'au moins un brin d'âme,
- une couche externe comprenant un unique brin de couche externe enroulé autour de l'âme, chaque brin d'âme et de couche externe présentant une limite d'élasticité mesurée selon la norme ISO 14125 à 23°C supérieure ou égale à 800 MPa, de préférence à 1000 MPa et plus préférentiellement à 1200 MPa, indépendamment du fait que la tringle comprenne :
- une âme comprenant plusieurs enroulements circonférentiels d'au moins un brin d'âme, chaque brin d'âme comprenant une fibre textile multifilamentaire d'âme noyée dans une matrice organique d'âme,
- une couche externe comprenant un unique brin de couche externe comprenant une fibre textile multifilamentaire de couche externe noyée dans une matrice organique de couche externe, le brin de couche externe étant enroulé autour de l'âme.

## Revendications

1. Tringle (20, 20') pour pneumatique (10), la tringle comprenant:
- une âme (30) comprenant plusieurs enroulements circonférentiels (E1, E2, E3) d'au moins un brin d'âme (B ; B1, B2, B3), chaque brin d'âme (B; B1, B2, B3) comprenant une fibre textile multifilamentaire d'âme noyée dans une matrice organique d'âme,
- une couche externe (C1) comprenant un unique brin (E) de couche externe comprenant une fibre textile multifilamentaire de couche externe noyée dans une matrice organique de couche externe, le brin (E) de couche externe étant enroulé autour de l'âme (30), la tringle étant **caractérisée en ce que** le matériau (Ma) dans lequel est réalisé chaque brin d'âme (B ; B1, B2 , B3) présente une limite d'élasticité (Re) mesurée selon la norme ISO 14125 supérieure ou égale à 800 MPa.

2. Tringle (20, 20') selon la revendication 1, dans laquelle l'âme (30) comprend un seul brin d'âme (B).

3. Tringle (20, 20') selon la revendication 1, dans laquelle l'âme (30) comprend plusieurs brins d'âme distincts (B1, B2, B3).

4. Tringle (20, 20') selon l'une quelconque des revendications précédentes, dans laquelle le matériau (Ma) dans lequel est réalisé chaque brin d'âme (B ; B1, B2 , B3) présente une limite d'élasticité (Re) mesurée selon la norme ISO 14125 à 23°C supérieure ou égale à 1000 MPa et plus préférentiellement à 1200 MPa.

5. Tringle (20, 20') selon l'une quelconque des revendications précédentes, dans laquelle le matériau (Ma) dans lequel est réalisé le brin (E) de couche externe présente une limite d'élasticité (Re) mesurée selon la norme ISO 14125 à 23°C supérieure ou égale à 800 MPa, de préférence à 1000 MPa et plus préférentiellement à 1200 MPa.

6. Tringle (20, 20') selon l'une quelconque des revendications précédentes, dans laquelle le matériau dans lequel est réalisé chaque brin d'âme (B ; B1, B2 , B3) et/ou le brin (E) de couche externe présente un module d'Young (E) mesuré selon la norme ISO 14125 à 23°C inférieur ou égal à 100 GPa, de préférence à 75 GPa et plus préférentiellement à 50 GPa.

7. Tringle (20, 20') selon l'une quelconque des revendications précédentes, dans laquelle le rapport (R) de la contribution (Rm) de l'âme (30) à la masse de la tringle (20, 20') sur la contribution (Rf) de l'âme (30) à la force à rupture (Fm) de la tringle (20, 20') est inférieur ou égal à 2, de préférence inférieur ou égal à 1,5 et plus préférentiellement inférieur ou égal à 1.

8. Tringle (20, 20') selon l'une quelconque des revendications précédentes, dans laquelle le rapport (R) de la contribution (Rm) de l'âme (30) à la masse de la tringle (20, 20') sur la contribution (Rf) de l'âme (30) à la force à rupture (Fm) de la tringle (20, 20') est supérieur ou égal à 0,25, de préférence à 0,4 et plus préférentiellement à 0,5.

9. Tringle (20, 20') selon l'une quelconque des revendications précédentes, dans laquelle la contribution (Rf) de l'âme (30) à la force à rupture (Fm) de la tringle (20, 20') est supérieure ou égale à 15 %, de préférence à 20 % et plus préférentiellement à 25 %.

10. Tringle (20, 20') selon l'une quelconque des revendications précédentes, dans laquelle la contribution (Rf) de l'âme (30) à la force à rupture (Fm) de la tringle (20, 20') est inférieure ou égale à 75%.

11. Tringle (20, 20') selon l'une quelconque des revendications précédentes, dans laquelle la contribution (Rm) de l'âme (30) à la masse de la tringle (20, 20') est supérieure ou égale à 15 %, de préférence 20 % et plus préférentiellement à 25 %.

12. Tringle (20, 20') selon l'une quelconque des revendications précédentes, dans laquelle la contribution (Rm) de l'âme (30) à la masse de la tringle (20, 20') est inférieure ou égale à 75%.

13. Tringle (20, 20') selon l'une quelconque des revendications précédentes, dans laquelle le rapport (Rd) du diamètre (Da) du tore défini par l'âme (30) sur le diamètre (Dt) du tore défini par la tringle (20, 20') est supérieur ou égal à 0,3, de préférence à 0,45, et plus préférentiellement à 0,5.

14. Tringle (20, 20') selon l'une quelconque des revendications précédentes, dans laquelle chaque fibre textile multifilamentaire d'âme et/ou de couche externe est choisie dans le groupe constitué par les fibres de verre, de carbone, de silice, de céramique, et les mélanges de telles fibres, de préférence dans le groupe constitué par les fibres de verre, de carbone et les mélanges de telles fibres, et plus préférentiellement chaque fibre textile multifilamentaire d'âme et/ou de couche externe est une fibre de verre.

15. Pneumatique (10, 10'), **caractérisé en ce qu'**il comprend au moins une tringle (20) selon l'une quelconque des revendications précédentes.

## Patentansprüche

1. Wulst (20, 20') für einen Reifen (10), wobei der Wulst Folgendes umfasst:
- einen Kern (30), der mehrere Umfangswicklungen (E1, E2, E3) mindestens eines Kerndrahts (B; B1, B2, B3) umfasst, wobei jeder Kerndraht (B; B1, B2, B3) eine textile Multifilament-Kernfaser umfasst, die in einer organischen Kernmatrix versenkt ist,
- eine Außenschicht (C1), die einen einzigen Außenschicht-Draht (E) umfasst, der eine textile Multifilament-Außenschichtfaser umfasst, die in einer organischen Außenschichtmatrix versenkt ist, wobei der Außenschicht-Draht (E) um den Kern (30) gewickelt ist, wobei der Wulst **dadurch gekennzeichnet ist, dass** das Material (Ma), aus dem jeder Kerndraht (B; B1, B2, B3) gefertigt ist, eine Elastizitätsgrenze (Re) aufweist, die nach der Norm ISO 14125 gemessen wird, die größer oder gleich 800 MPa ist.

2. Wulst (20, 20') nach Anspruch 1, wobei der Kern (30) einen einzelnen Kerndraht (B) umfasst.

3. Wulst (20, 20') nach Anspruch 1, wobei der Kern (30) mehrere separate Kerndrähte (B1, B2, B3) umfasst.

4. Wulst (20, 20') nach einem der vorhergehenden Ansprüche, wobei das Material (Ma), aus dem jeder Kerndraht (B; B1, B2, B3) gefertigt ist, eine Elastizitätsgrenze (Re) aufweist, die nach der Norm ISO 14125 bei 23°C gemessen wird, die größer oder gleich 1000 MPa und weiter bevorzugt größer oder gleich 1200 MPa ist.

5. Wulst (20, 20') nach einem der vorhergehenden Ansprüche, wobei das Material (Ma), aus dem der Außenschicht-Draht (E) gefertigt ist, eine Elastizitätsgrenze (Re) aufweist, die nach der Norm ISO 14125 bei 23°C gemessen wird, die größer oder gleich 800 MPa, vorzugsweise größer oder gleich 1000 MPa und weiter bevorzugt größer oder gleich 1200 MPa ist.

6. Wulst (20, 20') nach einem der vorhergehenden Ansprüche, wobei das Material, aus dem jeder Kerndraht (B; B2, B3, B3) und/oder der Außenschicht-Draht (E) gefertigt ist, ein Young'sches Modul (E) aufweist, das nach der Norm ISO 14125 bei 23°C gemessen wird, das kleiner oder gleich 100 GPa, vorzugsweise kleiner oder gleich 75 GPa und weiter bevorzugt kleiner oder gleich 50 GPa ist.

7. Wulst (20, 20') nach einem der vorhergehenden Ansprüche, wobei das Verhältnis (R) des Beitrags (Rm) des Kerns (30) zur Masse des Wulsts (20, 20') zum Beitrag (Rf) des Kerns (30) zur Reißkraft (Fm) des Wulsts (20, 20') kleiner oder gleich 2, vorzugsweise kleiner oder gleich 1,5 und weiter bevorzugt kleiner oder gleich 1 ist.

8. Wulst (20, 20') nach einem der vorhergehenden Ansprüche, wobei das Verhältnis (R) des Beitrags (Rm) des Kerns (30) zur Masse des Wulsts (20, 20') zum Beitrag (Rf) des Kerns (30) zur Reißkraft (Fm) des Wulsts (20, 20') größer oder gleich 0,25, vorzugsweise größer oder gleich 0,4 und weiter bevorzugt größer oder gleich 0,5 ist.

9. Wulst (20, 20') nach einem der vorhergehenden Ansprüche, wobei der Beitrag (Rf) des Kerns (30) zur Reißkraft (Fm) des Wulsts (20, 20') größer oder gleich 15 %, vorzugsweise größer oder gleich 20 % und weiter bevorzugt größer oder gleich 25 % ist.

10. Wulst (20, 20') nach einem der vorhergehenden Ansprüche, wobei der Beitrag (Rf) des Kerns (30) zur Reißkraft (Fm) des Wulsts (20, 20') kleiner oder gleich 75 % ist.

11. Wulst (20, 20') nach einem der vorhergehenden Ansprüche, wobei der Beitrag (Rm) des Kerns (30) zur Masse des Wulsts (20, 20') größer oder gleich 15 %, vorzugsweise größer oder gleich 20 % und weiter bevorzugt größer oder gleich 25 % ist.

12. Wulst (20, 20') nach einem der vorhergehenden Ansprüche, wobei der Beitrag (Rm) des Kerns (30) zur Masse des Wulsts (20, 20') kleiner oder gleich 75 % ist.

13. Wulst (20, 20') nach einem der vorhergehenden Ansprüche, wobei das Verhältnis (Rd) des Durchmessers (Da) des Torus, der von dem Kern (30) definiert wird, zum Durchmesser (Dt) des Torus, der von dem Wulst (20, 20') definiert wird, größer oder gleich 0,3, vorzugsweise größer oder gleich 0,45 und weiter bevorzugt größer oder gleich 0,5 ist.

14. Wulst (20, 20') nach einem der vorhergehenden Ansprüche, wobei jede textile Multifilament-Kern- und/oder Außenschichtfaser aus der Gruppe ausgewählt ist, die aus Glas-, Karbon-, Quarz-, Keramikfasern und Mischungen derartiger Fasern gebildet ist, vorzugsweise aus der Gruppe, die aus Glasfasern, Karbonfasern und Mischungen derartiger Fasern gebildet ist, und weiter bevorzugt ist jede textile Multifilament-Kern- und/oder Außenschichtfaser eine Glasfaser.

15. Reifen (10, 10'), **dadurch gekennzeichnet, dass** er mindestens einen Wulst (20) nach einem der vorhergehenden Ansprüche umfasst.

## Claims

1. Bead wire (20, 20') for a tyre (10), the bead wire comprising:
- a core (30) comprising a plurality of circumferential windings (E1, E2, E3) of at least one core yarn (B; B1, B2, B3), each core yarn (B; B1, B2, B3) comprising a core multifilament textile fibre embedded in an organic core matrix,
- an outer layer (C1) comprising a single outer-layer yarn (E) comprising an outer-layer multifilament textile fibre embedded in an organic outer-layer matrix, the outer-layer yarn (E) being wound around the core (30),
the bead wire being **characterized in that** the material (Ma) of which each core yarn (B; B1, B2, B3) is made has a yield strength (Re) measured in accordance with the standard ISO 14125 at 23°C greater than or equal to 800 MPa.

2. Bead wire (20, 20') according to Claim 1, wherein the core (30) comprises a single core yarn (B).

3. Bead wire (20, 20') according to Claim 1, wherein the core (30) comprises a plurality of separate core yarns (B1, B2, B3).

4. Bead wire (20, 20') according to any one of the preceding claims, wherein the material (Ma) of which each core yarn (B; B1, B2, B3 is made has a yield strength (Re) measured in accordance with the standard ISO 14125 at 23°C greater than or equal to 1000 MPa and more preferably greater than or equal to 1200 MPa.

5. Bead wire (20, 20') according to any one of the preceding claims, wherein the material (Ma) of which the outer-layer yarn (E) is made has a yield strength (Re) measured in accordance with the standard ISO 14125 at 23°C greater than or equal to 800 MPa, preferably greater than or equal to 1000 MPa and more preferably greater than or equal to 1200 MPa.

6. Bead wire (20, 20') according to any one of the preceding claims, wherein the material of which each core yarn (B; B1, B2, B3) and/or the outer-layer yarn (E) is made has a Young's modulus (E) measured in accordance with the standard ISO 14125 at 23°C less than or equal to 100 GPa, preferably less than or equal to 75 GPa and more preferably less than or equal to 50 GPa.

7. Bead wire (20, 20') according to any one of the preceding claims, wherein the ratio (R) of the contribution (Rm) of the core (30) to the mass of the bead wire (20, 20') to the contribution (Rf) of the core (30) to the force at break (Fm) of the bead wire (20, 20') is less than or equal to 2, preferably less than or equal to 1.5 and more preferably less than or equal to 1.

8. Bead wire (20, 20') according to any one of the preceding claims, wherein the ratio (R) of the contribution (Rm) of the core (30) to the mass of the bead wire (20, 20') to the contribution (Rf) of the core (30) to the force at break (Fm) of the bead wire (20, 20') is greater than or equal to 0.25, preferably greater than or equal to 0.4 and more preferably greater than or equal to 0.5.

9. Bead wire (20, 20') according to any one of the preceding claims, wherein the contribution (Rf) of the core (30) to the force at break (Fm) of the bead wire (20, 20') is greater than or equal to 15%, preferably greater than or equal to 20% and more preferably greater than or equal to 25%.

10. Bead wire (20, 20') according to any one of the preceding claims, wherein the contribution (Rf) of the core (30) to the force at break (Fm) of the bead wire (20, 20') is less than or equal to 75%.

11. Bead wire (20, 20') according to any one of the preceding claims, wherein the contribution (Rm) of the core (30) to the mass of the bead wire (20, 20') is greater than or equal to 15%, preferably greater than or equal to 20% and more preferably greater than or equal to 25%.

12. Bead wire (20, 20') according to any one of the preceding claims, wherein the contribution (Rm) of the core (30) to the mass of the bead wire (20, 20') is less than or equal to 75%.

13. Bead wire (20, 20') according to any one of the preceding claims, wherein the ratio (Rd) of the diameter (Da) of the torus defined by the core (30) to the diameter (Dt) of the torus defined by the bead wire (20, 20') is greater than or equal to 0.3, preferably greater than or equal to 0.45 and more preferably greater than or equal to 0.5.

14. Bead wire (20, 20') according to any one of the preceding claims, wherein each core multifilament textile fibre and/or outer-layer multifilament textile fibre is chosen from the group consisting of glass fibres, carbon fibres, silica fibres, ceramic fibres, and mixtures of such fibres, preferably from the group consisting of glass fibres, carbon fibres and mixtures of such fibres, and more preferably each core multifilament textile fibre and/or outer-layer multifilament textile fibre is a glass fibre.

15. Tyre (10, 10'), **characterized in that** it comprises at least one bead wire (20) according to any one of the preceding claims.
